# EUROPEAN PATENT APPLICATION

(11) **EP 4 014 759 A1**
(43) Date of publication of application: **22.06.2022**
(21) Application number: 20215437.3
(22) Date of filing: 18.12.2020
(51) Int. Cl.: A24B 13/00, A24B 15/16, A24B 15/30, A23L 17/60, A23L 33/10, A23L 33/105, A23L 33/21, A23L 33/22

(54) **NOVEL PRODUCT COMPRISING BROWN ALGA EXTRACT**

(71) Applicant: VIRAofSWEDEN AB, 129 57 Hägersten (SE)
(72) Inventor: Eliasson, Benjamin, 129 57 Hägersten (SE)
(74) Representative: Zacco Sweden AB

(57) **Abstract**

The present invention relates to a method for obtaining a composition for oral use comprising alginate, fucoidan and laminaran of a brown alga, said method comprising submitting a brown alga to parboiling; soaking in an aqueous sodium chloride solution; and soaking in an aqueous sodium carbonate solution. The present invention also relates to compositions obtainable by such methods, and to compositions comprising alginate, fucoidan and laminaran of a brown alga, as well as medicinal use of such compositions, in particular in a method for prevention, treatment, or reducing risk, of a viral infection.

## Description

### Field of the invention

The present invention relates to products suitable for oral use, similar to tobacco based oral products. In particular, the present invention relates to such products that reduce or eliminate the need for use of tobacco in oral products.

### Background of the invention

In 2011, around 4 200 000 hectares of land were devoted to tobacco growing. Deforestation for tobacco growing has many serious environmental consequences including loss of biodiversity, soil erosion and degradation, water pollution and increases in atmospheric carbon dioxide. Tobacco growing usually involves substantial use of chemicals including pesticides, fertilizers and growth regulators. These chemicals may affect drinking water sources as a result of run-off from tobacco growing areas. Research has also shown that tobacco crops deplete soil nutrients by taking up more nitrogen, phosphorus and potassium than other major crops. This depletion is compounded by topping and de-suckering plants, which increase the nicotine content and leaf yields of tobacco plant (Novotny, 2015)

Smokeless tobacco products are increasingly popular around the world. As compared to tobacco for smoking, smokeless tobacco products poses less of a health hazard to persons in proximity to the user, and most likely also to the user himself or herself since the tobacco product is not incinerated.

Smokeless tobacco products comprise dry products such as snuff, and moist products such as dipping tobacco and Swedish snus. Snuff is made from ground or pulverised tobacco leaves and is inhaled into the nasal cavity, whereas moist products are used in the mouth. Snus is provided in the form of a moist powder, sometimes pre-packed in a small bag, and placed in the oral cavity, usually under the lip, wherein tobacco components such as nicotine are delivered to the user through the mucosa.

A number of oral products intended to substitute oral tobacco products or to facilitate cessation of tobacco use or treatment of nicotine dependence have been suggested in the prior art.

WO2005/023227 suggests the use of cellulose as an inert carrier of nicotine in a nicotine containing pharmaceutical composition, wherein the cellulose is isolated from a non-seed organism. Such pharmaceutical compositions are not adapted or intended to resemble the look and feel of tobacco products.

Like plants and green algae, also brown algae produce cellulose, but these crystalline fibers account for only a small proportion of the cell wall, the amount of cellulose ranging between 1% and 8% of the dry weight of the thallus. The main cell wall components are anionic polysaccharides, namely alginates and fucoidans (Michel, 2010). Dietary fibre of *Fucus* species consist mainly of alginate, fucoidan, and laminaran, and most of these polysaccharides are present in dietary fibres (Catarino, 2018). The exact composition and content of polysaccharides in brown algae is known to vary by season and growth conditions.

### Summary of the invention

The present invention aims to provide a consumer product resembling an oral tobacco product, but which reduces the need for cultivation and processing of tobacco plants and the environmental impact of such cultivation and processing.

The present inventor has thus identified a need to provide consumer products that can at least partially substitute oral tobacco products such as snus, that dispense with tobacco in part or altogether, but provide the consumer with a product that closely resembles known oral tobacco products. The present inventor has realized that such a consumer product with a high resemblance to tobacco can be provided based on brown algae, such as algae of the genera *Sargassum* and *Fucus.*

In a first aspect, the invention relates to a method for obtaining a composition for oral use comprising alginate, fucoidan and laminaran of a brown alga, said method comprising submitting a brown alga to parboiling; soaking in an aqueous sodium chloride solution; and soaking in an aqueous sodium carbonate solution.

In one embodiment, the method comprises drying and/or cutting the brown alga after parboiling and before soaking in aqueous sodium chloride solution.

In one embodiment, parboiling is performed three times with boiling water for 0.5-5 minutes, preferably about 1 minute.

In one embodiment, soaking in an aqueous sodium chloride solution is performed at 60-95 °C for 10-25 hours, preferably at 90 °C for about 15 hours.

In one embodiment, soaking in an aqueous sodium carbonate solution is performed at 60-95 °C for 2-8 hours, preferably at 90 °C for about 5 hours.

In one embodiment, the method comprises mixing the brown alga with a component selected from the group consisting of tobacco, nicotine, tobacco flavour, and glycerine.

In one embodiment, the brown alga is selected from brown algae of the genera *Sargassum* or *Fucus.*

In one embodiment, the brown alga is selected from *Sargassum fusiforme* and *Fucus vesiculosus.*

In one aspect, the invention relates to a composition obtainable by the method according to the above.

In one aspect, the invention relates to a composition for oral use comprising alginate, fucoidan and laminaran of a brown alga.

In one embodiment, the composition comprises a component selected from the group consisting of tobacco, nicotine, tobacco flavour, and glycerine.

In one embodiment, the brown alga is selected from brown algae of the genera *Sargassum* or *Fucus,* such as selected from *Sargassum fusiforme* and *Fucus vesiculosus.*

In one embodiment, the composition comprises parboiled, dried and cut parts of the brown alga.

In one aspect, the invention relates to a composition according to the above for use in medicine.

In one embodiment, the use is in medicine is in a method for prevention, treatment, or reducing risk, of a viral infection.

### Detailed description

The present invention relates to a composition based on brown algae treated to provide a product that is, in itself, essentially odourless and tasteless but with a texture that closely resembles tobacco leaves that have been prepared as a snus product. The treatment of the brown algae, according to the invention, thus retains most or all of the polysaccharide components of the algae that provide structure to the algae, and hence also to the treated product. Volatile and low molecular components that confer smell and taste to the product are however removed. By retaining most or all of the polysaccharide components of the algae, and not isolating only individual components such as cellulose, it is possible to achieve a product that closely resembles tobacco based products.

Thus, in a first aspect, the present invention relates to a method for obtaining a composition comprising alginate, fucoidan and laminaran of a brown alga, said method comprising submitting a brown alga to parboiling; soaking in an aqueous sodium chloride solution; and soaking in an aqueous sodium carbonate solution. This provides a base product that can be used as is or further processed to prepare products for oral use.

In some embodiments, the method comprises drying and/or cutting the brown alga after parboiling and before soaking in aqueous sodium chloride solution. This provides a product resembling the structure of products based on cut tobacco leaves. In some embodiments, parboiling is performed three times with boiling water for 0.5-5 minutes, preferably about 1 minute.

In some embodiments, soaking in an aqueous sodium chloride solution is performed at 60-95 °C for 10-25 hours, preferably at 90 °C for about 15 hours.

In some embodiments, soaking in an aqueous sodium carbonate solution is performed at 60-95 °C for 2-8 hours, preferably at 90 °C for about 5 hours.

In some embodiments, the method further comprises mixing the brown alga with a component selected from the group consisting of tobacco, nicotine, glycerine, tobacco flavouring compositions, and other flavorants. This provides a product closely resembling traditional tobacco based products for oral use, such as snus.

In case the brown alga is mixed with tobacco, a hybrid product is obtained which can be viewed as a modified tobacco-based product with tobacco partially replaced by brown alga treated according to the invention. Such a hybrid product has the advantage of a reduced environmental impact from cultivation of tobacco plants.

Nicotine can be added at various concentrations to produce a product with a desired nicotine content, such as 0-8 g nicotine per kg dry algal product. Nicotine can be added in its free base form or as a physiologically acceptable, preferably water-soluble salt. This includes nicotine salts with formic acid, acetic acid, propionic acid, butyric acid, 2-methylbutyric acid, 3-methylbutyric acid, valeric acid, laurie acid, palmitic acid, tartaric acid, citric acid, malic acid, oxalic acid, benzoic acid, gentisic acid, gallic acid, phenylacetic acid, salicylic acid, phthalic acid, picric acid, sulfosalicylic acid, tannic acid, pectic acid, alginic acid, hydrochloric acid, chloroplatinic acid, silicotungstic acid, pyruvic acid, glutamic acid, and aspartic acid. The added nicotine is preferably chemically synthesized, but may also be isolated from natural sources, such as tobacco plants. If the algal product is mixed with tobacco as described above it is preferable to not also add nicotine.

Glycerine is added in some embodiments to preserve moisture in the final product.

Tobacco flavouring compositions and other flavorants useful in providing flavour to the composition are commercially available from a variety of manufacturers. Other flavours include mint, menthol, coffee, chocolate, Bordeaux wine, honey, vanilla, fruit (e.g. cherry, orange, apricot, plum, apple, strawberry, peach), camphor, cinnamon, rose, spearmint, Bourbon, Cola, whiskey and whisky.

In some embodiments, the brown alga used in the method is selected from brown algae of the genera *Sargassum* or *Fucus,* such as *Sargassum fusiforme* and *Fucus vesiculosus.*

In one aspect, the invention relates to a composition obtained or obtainable by the method according to the invention as described above. Such a composition is in some embodiments suitable for oral use, such as use as a substitute for oral smokeless tobacco.

In one aspect, the invention relates to a composition for oral use comprising alginate, fucoidan and laminaran of a brown alga. In some embodiments, the composition comprises alga that have been processed to reduce the content of water-soluble and volatile low-molecular compounds that confer odour and taste to untreated alga compositions.

In some embodiments, the composition has a significantly reduced content of water-soluble and volatile compounds as compared to the unprocessed alga, such as a content of water-soluble and volatile compounds of less than 50%, less than 40%, less than 30%, less than 20%, less than 10% or less than 5% of the corresponding content of an unprocessed alga of the same species harvested at the same location at the same time.

In some embodiments, the composition has a significantly reduced content of vitamin C as compared to the unprocessed alga, such as a vitamin C content of less than 50%, less than 40%, less than 30%, less than 20%, less than 10% or less than 5% of the vitamin C content of an unprocessed alga of the same species harvested at the same location at the same time.

In some embodiments, the composition has a significantly reduced content of phlorotannins as compared to the unprocessed alga, such as a phlorotannin content of less than 50%, less than 40%, less than 30%, less than 20%, less than 10% or less than 5% of the phlorotannin content of an unprocessed alga of the same species harvested at the same location at the same time.

In some embodiments, the composition has a significantly reduced content of fucoxanthin as compared to the unprocessed alga, such as a fucoxanthin content of less than 50%, less than 40%, less than 30%, less than 20%, less than 10% or less than 5% of the fucoxanthin content of an unprocessed alga of the same species harvested at the same location at the same time.

In some embodiments, the composition further comprises a component selected from the group consisting of tobacco, nicotine, tobacco flavour, and glycerine. In case the comprises tobacco, it can be viewed as a modified tobacco-based product with tobacco partially replaced by a composition according to the invention.

In some embodiments, the brown alga is selected from brown algae of the genera *Sargassum* or *Fucus,* such as *Sargassum fusiforme* and *Fucus vesiculosus.*

In some embodiments, the composition comprises parboiled, dried and cut parts of the brown alga. This provides for a composition closely resembling smokeless tobacco-based products for oral use. In some embodiments, the composition comprises a product obtained or obtainable by the method according to the invention as described above.

Brown algae, such as algae of the genera *Sargassum* and *Fucus,* are known to contain a plurality of bioactive compounds that have been suggested for therapeutic use. For instance, fucoidan has a well-documented anti-viral activity against a broad spectrum of viruses (Catarino, 2018). As viruses frequently enter the human body through the nasopharyngeal cavity, a composition according to the present invention may be used to exert anti-viral activity in the nasopharyngeal cavity to prevent, treat or reduce the risk of viral infections.

The present invention thus in one aspect relates to the composition according to the invention for use in medicine, such as in a method to prevent, treat or reduce the risk of viral infections. In one embodiment, the virus causing the viral infection is a respiratory virus, such as influenza virus, respiratory syncytial virus, parainfluenza viruses, metapneumovirus, rhinovirus, coronavirus, adenovirus, and/or bocavirus.

### Examples

The following examples are provided to illustrate the invention and enable a full understanding of the invention. They shall not be construed as limiting the scope of the invention, which is that defined in the appended claims.

### Example 1: Preparation of a composition according to the invention

Whole seaweed (*Sargassum fusiforme* or *Fucus vesiculosus*) was parboiled for about 1 minute in tap water. The water was discarded and the parboiling repeated twice. The parboiled wet seaweed was spread on a tray and dried at 90 °C in an oven for about 4 hours. The dried seaweed was essentially odourless and tasteless. The dried seaweed was then finely cut with a standard domestic mixer.

1 kg of dried and cut seaweed was put in 1 L saline solution (100 g NaCI in 1 L boiling water) and thoroughly mixed. The mixture was transferred to a plastic tray with a lid and left to soak at 90 °C in an oven for about 15 hours.

The saline solution was drained from the seaweed and the seaweed then transferred to a 5 dL solution of boiling water and 100 g sodium carbonate and thoroughly mixed. The mixture was transferred to a plastic tray with a lid and left to soak at 90 °C in an oven for about 5 hours.

100 g glycerine was added to the processed seaweed to obtain a base product.

The base product was then mixed with 0-8 g chemically synthesized nicotine and 75 mL tobacco flavour. The obtained product closely resembled tobacco based snus products.

### References

Catarino, M. (2018). Phycochemical Constituents and Biological Activities of Fucus spp. Marine Drugs, 16(8), 249. doi:10.3390/md16080249
Michel, G. (2010). The cell wall polysaccharide metabolism of the brown alga Ectocarpus siliculosus. New Phytologist, 188, 82-97.
Novotny, T. (2015). The environmental and health impacts of tobacco agriculture, cigarette manufacture and consumption. Bulletin of the World Health Organization, 93, 877-880.

## Claims

1. A method for obtaining a composition for oral use comprising alginate, fucoidan and laminaran of a brown alga, said method comprising submitting a brown alga to parboiling; soaking in an aqueous sodium chloride solution; and soaking in an aqueous sodium carbonate solution.

2. The method according to claim 1, further comprising drying and/or cutting the brown alga after parboiling and before soaking in aqueous sodium chloride solution.

3. The method according to any one of the preceding claims, wherein parboiling is performed three times with boiling water for 0.5-5 minutes, preferably about 1 minute.

4. The method according to any one of the preceding claims, wherein soaking in an aqueous sodium chloride solution is performed at 60-95 °C for 10-25 hours, preferably at 90 °C for about 15 hours.

5. The method according to any one of the preceding claims, wherein soaking in an aqueous sodium carbonate solution is performed at 60-95 °C for 2-8 hours, preferably at 90 °C for about 5 hours.

6. The method according to any one of the preceding claims, further comprising mixing the brown alga with a component selected from the group consisting of tobacco, nicotine, tobacco flavour, and glycerine.

7. The method according to any one of the preceding claims, wherein the brown alga is selected from brown algae of the genera *Sargassum* or *Fucus.*

8. The method according to claim 7, wherein the brown alga is selected from *Sargassum fusiforme* and *Fucus vesiculosus.*

9. A composition obtainable by the method according to any one of the preceding claims.

10. A composition for oral use comprising alginate, fucoidan and laminaran of a brown alga.

11. The composition according to claim 10, further comprising a component selected from the group consisting of tobacco, nicotine, tobacco flavour, and glycerine.

12. The composition according to any one of claims 10 or 11, wherein the brown alga is selected from brown algae of the genera *Sargassum* or *Fucus,* such as selected from *Sargassum fusiforme* and *Fucus vesiculosus.*

13. The composition according to any one of claims 10-12, wherein the composition comprises parboiled, dried and cut parts of the brown alga.

14. The composition according to any one of claims 9-13 for use in medicine.

15. The composition for use according to claim 15, wherein the use is in a method for prevention, treatment, or reducing risk, of a viral infection.
